# EUROPÄISCHE PATENTANMELDUNG

(11) **EP 1 315 132 A2**
(43) Veröffentlichungstag der Anmeldung: **28.05.2003**
(21) Anmeldenummer: 02026270.5
(22) Anmeldetag: 26.11.2002
(51) Int. Cl.: G07F 19/00

(54) **Automatische Zahlungsanforderung über berührungslosen Leser**

(30) Priorität: 26.11.2001 DE 10157930
(71) Anmelder: SIEMENS AKTIENGESELLSCHAFT, 80333 München (DE)
(72) Erfinder: Kopetzky, Peter, 82008 Unterhaching (DE)

(57) **Zusammenfassung**

Die Erfindung betrifft eine Vorrichtung und Verfahren zur Abwicklung einer Zahlungstransaktion zwischen einem Kundenendgerät (K) und einem Händlerendgerät (H) mit einem netzbasierenden zentralen Kontoverwaltungssystem (TH, AMS), wobei das Kundenendgerät (K) und das Händlerendgerät (H) über eine lokale Übertragungsschnittstelle verfügen und das Kundenendgerät (K) und/oder das Händlerendgerät (H) an das öffentliche Telekommunikationsnetz angeschlossen sind.

## Beschreibung

Die vorliegende Erfindung betrifft eine Vorrichtung und ein Verfahren zur Abwicklung einer Zahlungstransaktion zwischen einem Kundenendgerät und einem Händlerendgerät mit einem netzbasierenden zentralen Kontoverwaltungssystem.

Mit der Einführung schneller Mobilfunknetze, wie etwa GPRS oder UMTS, entwickelt sich das ursprünglich nur für Sprachtelefonie und SMS-Textbotschaften eingesetzte Handy zum multimediafähigen und universellen mobilen Assistent, für den in Zukunft auch verstärkt mobile Anwendungen und Dienstleistungen angeboten werden. Für dieses sogenannte Mobile Business werden in den kommenden Jahren enorme Wachstumsraten prognostiziert. Handys bieten nämlich gegenüber PC's wesentliche Vorteile, da sie trotz ihrer kompakten Bauweise mit GPRS und UMTS jederzeit und praktisch allerorten internetfähig, personalisiert und bedienerfreundlich sind.

Ferner hat sich bereits das üblicherweise praktisierte Bezahlverfahren beim mobilen Telefonieren in Form der gewohnten monatlichen Telefonrechnung bzw. in Form einer Prepaid-Karte bewährt und wird von den Benutzern akzeptiert. Bisher stehen jedoch vor allem die Sprachkommunikation und das Versenden bzw. Empfangen von SMS-Nachrichten als nutzbare Dienstleistungen auf dem mobilen Sektor zur Verfügung, so dass das entsprechende Abrechnungsverfahren hierauf ausgelegt ist. Mit einem erweiterten Angebot mobiler Anwendungen und Dienstleistungen sind noch Überlegungen bezüglich der Abrechnung der genutzten Anwendungen bzw. Dienste erforderlich. Eine funktionierende und benutzerfreundliche Bezahlinfrastruktur ist eine wichtige Voraussetzung dafür, dass neue Dienste von Netzbetreibern und Drittanbietern im mobilen Bereich überhaupt Anwendung finden.

Das Bezahlverfahren im Mobile Business sollte dabei sowohl den Anforderungen der Anbieter (Händler) als auch die der Anwender (Kunden) genügen. Es muß schnell, sicher, überall einsetzbar und einfach zu handhaben sein. Im Unterschied zu gängigen klassischen bargeldlosen Bezahlverfahren, wie etwa einer Kreditkarte, sollte ferner das Bezahlverfahren im Mobile Business nicht nur für größere Geldbeträge, sondern auch für Kleinstbeträge ("Micropayments") geeignet sein.

Es sind auch schon bargeldlose Bezahlverfahren bekannt, die über ein mobiles Endgerät ablaufen, beispielsweise zum Bezahlen einer Getränkedose an einem Automaten mittels eines Handys. Derartige Verfahren sind in der Regel für Szenarien ausgelegt, bei denen der Kaufvorgang über ein öffentliches Telekommunikationsnetz abgewickelt wird. Nachdem der Kunden an einem Verkaufsautomaten eine bestimmte Ware ausgewählt hat, erfolgt die weitere Steuerung des Automaten über das öffentliche Telekommunikationsnetz. Dies hat den Nachteil, dass nicht nur der Kunde über ein an das öffentliche Telekommunikationsnetz angeschlossenes Endgerät, sondern auch der Automat (Händler) über einen direkten Anschluß an das öffentliche Netz verfügen muß. Da ferner die für den Kaufvorgang notwendigen Eingaben über ein Handy umständlich sind, eignen sich diese Verfahren nicht wirklich zum effektiven Bezahlen in Ladengeschäften oder an Verkaufsautomaten, den sogenannten Points-of-Sales (POS).

Der Erfindung liegt daher die Aufgabe zugrunde, ein einfaches und sicheres Bezahlverfahren anzugeben, welches flexible und universell verwendbar ist, insbesondere auch an Verkaufsautomaten bzw. Händlerendgeräten, die nicht über einen eigenen Anschluß an das öffentliche Telekommunikationsnetz verfügen.

Diese Aufgabe wird durch eine Vorrichtung mit den Merkmalen des Anspruches 1 bzw. - hinsichtlich ihres Verfahrensaspektes - durch ein Verfahren gemäß der Ansprüche 4 und 5 gelöst. Die Erfindung schließt den wesentlichen Gedanken des Einsatzes einer lokalen Übertragungsschnittstelle zwischen Kundenendgerät und "Händler"endgerät als Grundelement der Vorrichtung zur Abwicklung der Zahlungstransaktion ein.

Unter Verwendung einer lokalen Übertragungsschnittstelle als exklusive Verbindung zu einer transparenten Offline-Übermittlung von aktuellen Zahlungsdaten erfolgt eine direkte Verbindung zwischen dem Kommunikationsendgerät des Kunden und dem Geschäftsendgerät des Händlers. Unter einem Geschäftsendgerät eines Händlers ist beispielsweise die Kasse oder aber auch der SB-Automat zu verstehen, wobei bei letzterem der Händler nicht direkt am Kaufvorgang beteiligt ist. Über solch eine exklusive Verbindung können Daten, die für ein netzbasierendes zentrales Kontoverwaltungssystem erforderlich sind, zwischen dem mobilen Endgerät des Kunden und dem Geschäftsendgerät des Händlers unter Einsatz geeigneter kryptologischer Verfahren transparent durchgereicht werden. Das netzbasierende zentrale Kontoverwaltungssystem umfaßt in der Regel einen sogenannten Transaction Handler und ein Account Management System. Über diese beiden Komponenten wird bei einem Kaufvorgang zunächst die Zahlungsfähigkeit des Kunden überprüft und anschließend der Betrag der Zahlungsanforderung auf dem Kundenkonto reserviert bzw. auf das Konto des Händlers umgebucht.

Bei der erfindungsgemäßen Lösung ist es nicht mehr notwendig, dass sowohl das Händlerendgerät als auch das Kundenendgerät an das öffentliche Telekommunikationsnetz angeschlossen sind, um mit dem netzbasierenden zentralen Kontoverwaltungssystem kommunizieren zu können. Der bei einem Kaufvorgang notwendige Datenfluß zwischen dem Händlerendgerät bzw. dem Kundenendgerät und dem netzbasierenden zentralen Kontoverwaltungssystem wird entweder über das Endgerät des Kunden oder des Händlers umgelegt, je nachdem, welches der beiden Endgeräte über einen Anschluß an das öffentliche Telekommunikationsnetz verfügt.

Über die lokale Übertragungsschnittstelle können die beiden Endgeräte kommunizieren und die erforderlichen Daten austauschen. Diese Art des Zahlungsablaufes wird auch Kunden- bzw. Händler-Relay genannt, je nachdem ob das Kunden- bzw. Händlerendgerät an das öffentliche Telekommunikationsnetz angeschlossen ist.

Wesentlich bei dem erfindungsgemäßen Verfahren ist dementsprechend, dass die aktuellen Zahlungsdaten zwischen Kunden und Händler über eine direkte Nutzer-Nutzer-Schnittstelle lokal übermittelt werden. Dies ist möglich, da der Kunde die Ware am Point-of-Sales auswählt, also direkt an einem Verkaufsautomaten oder in einem Ladengeschäft. Demzufolge ist eine eindeutige Zuordnung der Vertragspartner, in diesem Fall von Kunde und Händler, durch eine derartige Punkt-zu-Punkt-Verbindung physikalisch möglich.

Die leitungsfreie Datenübermittlung kann über optische, akustische, magnetische oder induktive Signalgeber in beide Richtungen erfolgen, d.h. vom Kundenendgerät zum Händlerendgerät und umgekehrt. Der genaue Aufbau des netzbasierenden Zahlungssystems und der detaillierte Ablauf der Authentifizierung und Authorisierung können je nach Einzelfall variieren und werden hier nicht näher diskutiert.

Ein wesentlicher Vorteil der Erfindung liegt insbesondere darin, dass entweder das Kunden- oder das Händlerendgerät als sogenannter Transponder, d.h. als eine Vorrichtung ohne separate Stromversorgung, einsetzbar ist. Denkbar wäre beispielsweise, das Bezahlungsverfahren für Parkuhren, Zeitungsautomaten, Drehkreuze, Waschautomaten, Taxis, etc. einzusetzen. Desweiteren kann das Zahlungsverfahren bei Zugangskontrollen, zur Bereitstellung von Mietautos mit automatischer Abrechnung bei SB-Autovermietungen, oder zum Kauf von Fahrscheinen, Flugtickets o. ä. eingesetzt werden.

Die Übertragung über eine Punkt-zu-Punkt-Schnittstelle mit kurzer Reichweite ist, im Vergleich zum öffentlichen Telekommunikationsnetz, als ein relativ sicheres Verfahren bekannt. Deshalb kann über diese Schnittstelle auch ein privater Kodierungsschlüssel für den späteren Gebrauch im öffentlichen Netz übermittelt werden. Alle aktuellen Zahlungsdaten können somit lokal übertragen werden.

Ferner ist die gesamte Handhabung übersichtlich. Die eindeutige Zuordnung von Händler und Kunde ist durch die physikalische Zuordnung beider Endgeräte gegeben. Mit der Erfindung müssen aktuelle Daten, etwa Preise und elektronische Belege, nicht mehr sowohl an den Händler als auch an den Kunden über das öffentliche Netze übertragen werden. Des weiteren stellt die erfindungsgemäße Lösung ein bedienerfreundliches Bezahlverfahren dar, weil die für den Kaufvorgang notwendige manuelle Dateneingabe in das Endgerät des Kunden reduziert ist.

Vorteile und Zweckmäßigkeiten der Erfindung werden im übrigen aus den Unteransprüchen sowie der Beschreibung bevorzugter Ausführungsformen anhand der Figuren deutlich. Von diesen zeigen:
Fig. 1 ein Beispiel eines bargeldlosen Zahlungsablaufes nach dem Stand der Technik,
Fig. 2 ein Beispiel einer erfindungsgemäßen Lösung des bargeldlosen Zahlungsablaufes in der Ausführung als Kunden-Relay,
Fig. 3 ein Beispiel einer erfindungsgemäßen Lösung des bargeldlosen Zahlungsablaufes in der Ausführungsform als Händler-Relay,
Fig. 4 ein schematisches Ablaufdiagramm zwischen den beteiligten Vertragspartnern bei dem Beispiel gemäß Fig. 2 und
Fig. 5 ein schematisches Ablaufdiagramm zwischen den beteiligten Vertragspartnern bei dem Beispiel gemäß Fig. 3.

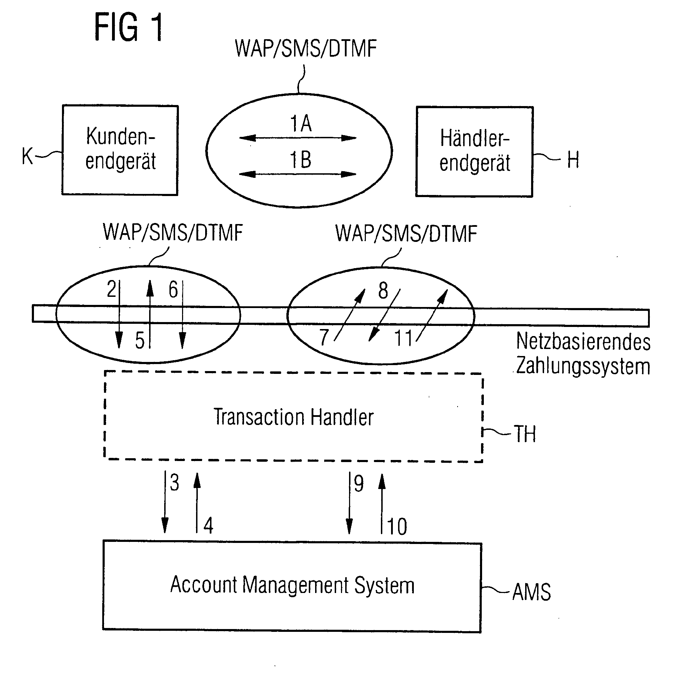

In Fig. 1 ist ein Beispiel eines bargeldlosen Zahlungsablaufes nach dem Stand der Technik dargestellt, bei dem ein Kaufvorgang über ein öffentliches Fest- oder Mobilfunknetz, beispielsweise per WAP, SMS oder DTMF, gestartet und beim Bezahlen eine Verbindung zwischen einem zentralen Kontoverwaltungssystem und beiden Endgeräten - das des Kunden und das des Händlers - aufgebaut wird.

Im Schritt 1A wählt zunächst ein Kunde über ein Kundenendgerät K einen Händler bzw. ein Händlerendgerät H und eine gewünschte Ware bzw. Dienstleistung aus. Nachdem der Kunde seine Wahl getroffen hat, werden im Schritt 1B Preis und Identifizierungsdaten übermittelt. Anschließend wird in Schritt 2 eine Zahlungsanforderung an ein netzbasierendes zentrales Kontoverwaltungssystem über das öffentliche Netz übertragen. Das netzbasierende zentrale Kontoverwaltungssystem setzt sich aus einem Transaction Handler TH und einem Account Management System AMS zusammen.

In Schritt 3 erfolgt eine Überprüfung der Zahlungsfähigkeit des Kunden durch Übermittlung einer Authentisierungsanfrage vom Transaction Handler TH an das Account Management System AMS. In Schritt 4 wird das Ergebnis der Authentisierungsanfrage vom Account Management System AMS an den Transaction Handler TH übermittelt. In Schritt 5 erfolgt eine Anfrage vom Transaction Handler TH über das öffentliche Telekommunikationsnetz an das Kundenendgerät K zur Buchung des Betrages der Zahlungsanforderung. In Schritt 6 übermittelt der Kunde über das Kundenendgerät eine Bevollmächtigung zur Buchung des Betrages der Zahlungsanforderung an den Transaction Handler TH.

Im weiteren Verlauf erfolgt in Schritt 7 eine Anfrage vom Transaction Handler TH über das öffentliche Netz an das Händlerendgerät H zur Buchung des Betrages der Zahlungsanforderung. Diese Anfrage wird in Schritt 8 mittels einer Bevollmächtigung zur Buchung des Betrages der Zahlungsanforderung von dem Händlerendgerät H an den Transaction Handler TH über das öffentliche Netz beantwortet. Eine Zahlungsveranlassung des gebuchten Geldbetrages erfolgt anschließend in Schritt 9 durch Übermittlung der Zahlungsbestätigung vom Transaction Handler TH an das Account Management System AMS. In Schritt 10 wird eine Quittung über den erfolgten Zahlungstransfer vom Account Management System AMS an den Transaction Handler TH übertragen. Letztendlich wird in Schritt 11 diese Quittung vom Transaction Handler TH an das Händlerendgerät H über das öffentliche Netz übermittelt.

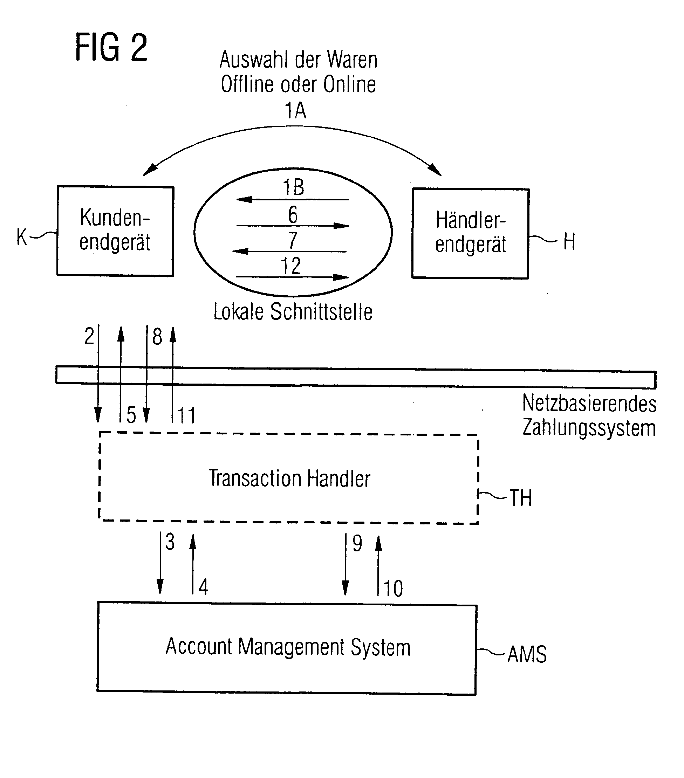

In Fig. 2 ist ein Beispiel einer erfindungsgemäßen Lösung des bargeldlosen Zahlungsablaufes in der Ausführung als Kunden-Relay gezeigt. Hier werden sämtliche Daten, die zwischen dem Händlerendgerät H und dem Transaction Handler TH des netzbasierenden zentralen Kontoverwaltungssystems gemäß dem in Fig. 1 gezeigten Beispiel über das öffentliche Telekommunikationsnetz laufen, über das Kundenendgerät K umgelegt.

Nachdem der Kunde über das Kundenendgerät K die Waren bzw. Dienstleistungen im Schritt 1A ausgewählt hat, werden in Schritt 1B am Point-of-Sale aktuelle Zahlungsdaten zwischen dem Endgerät des Händlers H und des Kunden K über eine direkte Nutzer-Nutzer-Schnittstelle lokal übermittelt. Der Kunde hält dabei beispielsweise sein Handy an den entsprechenden Verkaufsautomaten, und die Zahlungsdaten werden auf das Handy übertragen. Die Zahlungsanwendung im Handy wird automatisch gestartet. Der Artikelname und der Preis werden am Handy und/oder am Display des Automaten angezeigt., In den nächsten Schritten werden, analog zu dem Zahlungsablauf in Fig. 1, die Überprüfung der Zahlungsfähigkeit beim zentalen Kontoverwaltungssystem durchgeführt. Bei dem Kunden-Relay-Verfahren werden dabei die Daten über das Endgerät des Kunden K an den Transaction Handler TH übermittelt.

Nachdem die Zahlungsanforderung an den Transaction Handler TH über das öffentliche Netz übertragen wurde, erfolgt hier die Authentisierung des Kunden. Des weiteren wird in dem Account Management System AMS die Zahlungsfähigkeit des Kunden überprüft. Nachdem der zu zahlende Betrag auf dem Kundenkonto reserviert wurde, wird der Kunde gebeten, die Zahlung zu bestätigen. Diese Aufforderung wird von dem Transaction Handler TH über das öffentliche Telekommunikationsnetz an das Kundenendgerät K übermittelt. Der Kunde bestätigt anschließend die Zahlung des angezeigten Betrages, und die eigentliche Zahlungstransaktion wird durchgeführt. Nach Erhalt der Zahlungsbestätigung in Schritt 11 und 12 fällt beispielsweise die gekaufte Ware in den Ausgangskorb des Automaten. Mit der Ausgabe der Ware ist der Kaufvorgang somit abgeschlossen.

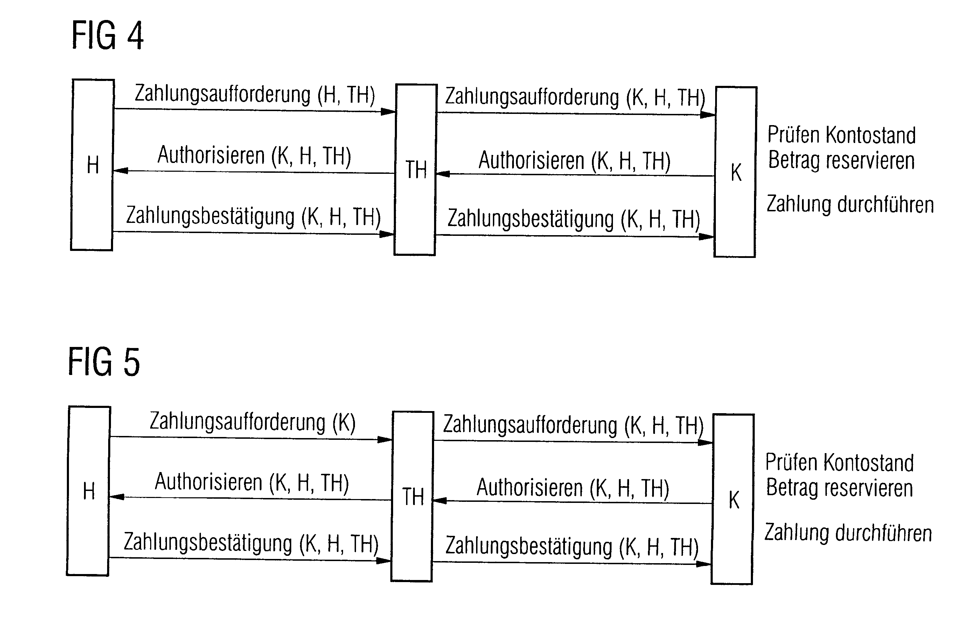

Das in dem ersten Ausführungsbeispiel gemäß Fig. 2 zugrunde liegende Ablaufdiagramm ist zur besseren Verdeutlichung in Fig. 4 schematisch dargestellt.

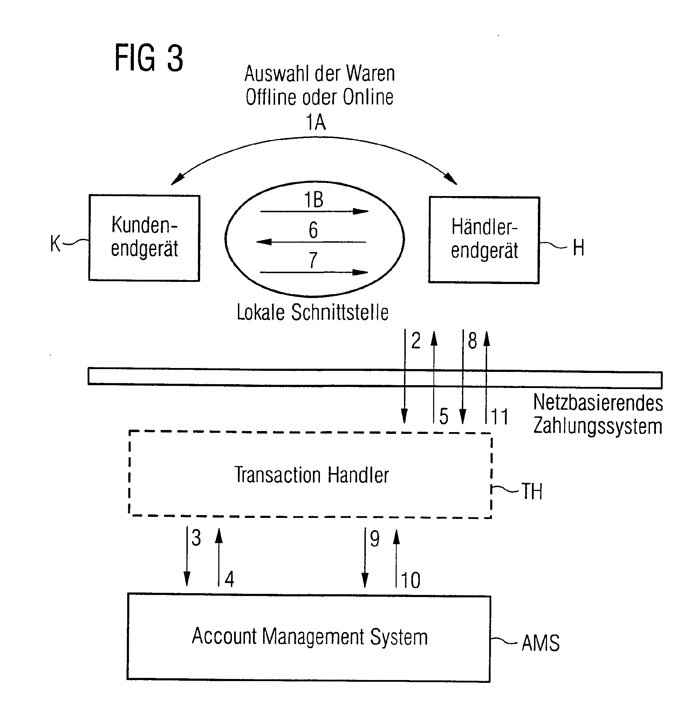

Fig. 3 zeigt ein weiteres Beispiel einer erfindungsgemäßen Lösung des bargeldlosen Zahlungsablaufes in der Ausführungsform als Händler-Relay. Im Prinzip entspricht dies der Ausführungsform gemäß Fig. 2, bis auf die Tatsache, dass sämtliche Daten, die zwischen dem Kundenendgerät K und dem netzbasierenden Transaction Handler TH des zentralen Kontoverwaltungssystems zu übertragen sind, über das Endgerät des Händlers H durchgereicht werden.

In einer besonderen Ausführungsform ist das Endgerät des Kunden K nur ein Datenträger, wie beispielsweise eine Magnetstreifenkarte, über die sich der Kunde beim Händlerendgerät H authentifiziert. Die anschließende Autorisierung erfolgt als Offline-Anfrage, beispielsweise über eine Bestätigungstaste direkt am Point-of-Sale. Dieses Verfahren ist dem Bezahlen mit Kredit- oder Geldkarten ähnlich.

Das dem ersten Ausführungsbeispiel gemäß Fig. 3 zugrundeliegende Ablaufdiagramm ist zur besseren Verdeutlichung noch in Fig. 5 schematisch dargestellt.

Die Ausführung der Erfindung ist nicht auf die beschriebenen Ausführungsbeispiele beschränkt, sondern auch in einer Vielzahl von Abwandlungen möglich, die im Rahmen fachgemäßen Handelns liegen.

## Patentansprüche

1. Vorrichtung zur Abwicklung einer elektronischen Zahlungstransaktion zwischen einem Kundenendgerät (K) und einem Händlerendgerät (H) mit einem netzbasierenden zentralen Kontoverwaltungssystem (TH, AMS),
**dadurch gekennzeichnet, dass**
- das Kundenendgerät (K) und das Händlerendgerät (H) eine lokale Übertragungsschnittstelle als exklusive Verbindung zu einer transparenten Offline-Übermittlung von aktuellen Zahlungsdaten und einer Offline-Bevollmächtigungsabfrage aufweisen und
- entweder das Kundenendgerät (K) oder das Händlerendgerät (H) an das öffentliche Telekommunikationsnetz angeschlossen sind.

2. Vorrichtung nach Anspruch 1,
**dadurch gekennzeichnet, dass**
das Kundenendgerät (K) und das Händlerendgerät (H) eine korrespondierende Verschlüsselungsvorrichtung aufweisen, um aktuelle Zahlungsdaten und/oder Bevollmächtigungsabfragen kryptologisch gesichert zu übermitteln.

3. Vorrichtung nach Anspruch 1 oder 2,
**dadurch gekennzeichnet, dass**
die berührungslose Datenübermittlung der lokalen Übertragungsschnittstelle(n) zwischen dem Kundenendgerät (K) und dem Händlerendgerät (H) über optische, akustische, magnetische oder induktive Signalgeber erfolgt.

4. Verfahren zur Abwicklung einer Zahlungstransaktion zwischen einem netzbasierendem Kundenendgerät (K) und einem Händlerendgerät (H) mit einem netzbasierenden zentralen Kontoverwaltungssystem (TH, AMS), mit folgenden Verfahrensschritten:
a) ein Angebot über wenigstens eine Ware oder einen Dienst und die dazu gehörigen Preis- und Identifizierungsdaten werden zwischen dem Händlerendgerät (H) und Kundenendgerät (K) gegenseitig ausgetauscht;
b) eine Zahlungsanforderung wird von dem Kundenendgerät (K) an das zentrale Kontoverwaltungssystem (TH, AMS) über das öffentliche Telekommunikationsnetz übermittelt;
c) die. Zahlungsfähigkeit wird im zentralen Kontoverwaltungssystem (TH, AMS) überprüft;
d) eine Anfrage zur Bestätigung der Buchung des Betrages der Zahlungsanforderung wird von dem zentralen Kontoverwaltungssystem (TH, AMS) über das öffentliche Telekommunikationsnetz an das Kundenendgerät (K) übermittelt;
e) eine gegenseitige Bestätigung über das Zustandekommen des Geschäftes wird zwischen dem Kundenendgerät (K) und dem Händlerendgerät (H) übermittelt;
f) eine Zahlungsbestätigung wird von dem Kundenendgerät (K) an das zentrale Kontoverwaltungssystem (TH, AMS) über das öffentliche Telekommunikationsnetz übermittelt;
g) eine Zahlungsveranlassung des gebuchten Geldbetrages erfolgt im zentrale Kontoverwaltungssystem (TH, AMS); und
h) eine Quittierung über den erfolgten Zahlungstransfer wird vom zentrale Kontoverwaltungssystem (TH, AMS) an das Kundenendgerät (K) über das öffentliche Telekommunikationsnetz übermittelt.

5. Verfahren zur Abwicklung einer Zahlungstransaktion zwischen einem Kundenendgerät (K) und einem netzbasierendem Händlerendgerät (H) mit einem netzbasierenden zentralen Kontoverwaltungssystem (TH, AMS), mit folgenden Verfahrensschritten:
a) ein Angebot über wenigstens eine Ware oder einen Dienst und die dazu gehörigen Preis- und Identifizierungsdaten werden zwischen dem Händlerendgerät (H) und Kundenendgerät (K) gegenseitig ausgetauscht;
b) eine Zahlungsanforderung wird von dem Händlerendgerät (H) an das zentrale Kontoverwaltungssystem (TH, AMS) über das öffentliche Telekommunikationsnetz übermittelt;
c) die Zahlungsfähigkeit wird im zentralen Kontoverwaltungssystem (TH, AMS) überprüft;
d) eine Anfrage zur Bestätigung der Buchung des Betrages der Zahlungsanforderung wird von dem zentralen Kontoverwaltungssystem (TH, AMS) über das öffentliche Telekommunikationsnetz an das Händlerendgerät (H) übermittelt;
e) eine gegenseitige Bestätigung über das Zustandekommen des Geschäftes wird zwischen dem Kundenendgerät (K) und dem Händlerendgerät (H) übermittelt;
f) eine Zahlungsbestätigung wird von dem Händlerendgerät (K) an das zentrale Kontoverwaltungssystem (TH, AMS) über das öffentliche Telekommunikationsnetz übermittelt;
g) eine Zahlungsveranlassung des gebuchten Geldbetrages erfolgt im zentrale Kontoverwaltungssystem (TH, AMS); und
h) eine Quittierung über den erfolgten Zahlungstransfer wird vom zentrale Kontoverwaltungssystem (TH, AMS) an das Händlerendgerät (H) über das öffentliche Telekommunikationsnetz übermittelt.

6. Verfahren nach Anspruch 4 oder 5,
**dadurch gekennzeichnet, dass**
das Angebot über wenigstens eine Ware oder einen Dienst und die dazu gehörigen Preis- und Identifizierungsdaten zwischen dem Händlerendgerät (H) und Kundenendgerät (K) im Verfahrensschritt a) durch eine Offline-Übermittlung am Point-of-Sale über die lokalen Schnittstellen des Händler- (H) bzw. Kundenendgerätes (K) gegenseitig ausgetauscht werden.

7. Verfahren nach einem der Ansprüche 4 bis 6,
**dadurch gekennzeichnet, dass**
die gegenseitige Bestätigung über das Zustandekommen des Geschäftes über eine Offline-Übermittlung am Point-of-Sale mittels der lokälen Schnittstellen des Händler- (H) bzw. Kundenendgerätes (K) erfolgt.
